# EUROPEAN PATENT SPECIFICATION

(11) **EP 2 469 809 B1**
(45) Date of publication and mention of the grant of the patent: **10.08.2016**
(21) Application number: 11194484.9
(22) Date of filing: 20.12.2011
(51) Int. Cl.: H04M 1/02, G06F 1/16

(54) **Mobile Device**
Mobile Vorrichtung
Dispositif mobile

(30) Priority: 22.12.2010 JP 2010285435
(43) Date of publication of application: 27.06.2012
(73) Proprietor: Casio Computer Co., Ltd., Tokyo 151-8543 (JP)
(72) Inventor: Ushigome, Youichi, Hamura-shi, Tokyo 205-8555 (JP); Ogasawara, Satoshi, Hamura-shi, Tokyo 205-8555 (JP); Meguro, Hiromasu, Hamura-shi, Tokyo 205-8555 (JP); Usui, Yasunori, Hamura-shi, Tokyo 205-8555 (JP)
(74) Representative: Grünecker Patent- und Rechtsanwälte PartG mbB

(56) References cited:
- EP-A2- 2 262 204
- US-A- 5 946 395
- US-A1- 2006 079 128

## Description

### BACKGROUND OF THE INVENTION

### 1. Field of the Invention

The present invention relates to a mobile device, such as personal digital assistants (PDA), mobile information terminals (handy terminals), mobile phones, portable personal computers, and electronic cameras, the mobile device including an upper case, a lower case arranged under the upper case, and a middle case arranged inside the upper case and the lower case, comprising a first engaging section which is provided in a peripheral edge portion of an undersurface of the upper case; a second engaging section which is provided in a peripheral edge portion of a top surface of the middle case and engages with the first engaging section; a third engaging section which is provided in a peripheral edge portion of an undersurface of the middle case; and a fourth engaging section which is provided in a peripheral edge portion of a top surface of the lower case and engages with the third engaging section.

### 2. Description of the Related Art

A mobile device, such as a mobile phone, is known that includes an upper case and a lower case and is structured such that a module is mounted inside the upper case and the lower case, as described in Japanese Patent Application Laid-Open (Kokai) Publication No. 2004-343751.

This type of mobile device is structured such that a first engaging rib is provided in the outer peripheral portion of the upper case, a second engaging rib that engages with the first engaging rib of the upper case is provided in the outer peripheral portion of the lower case, and the first engaging rib and the second engaging rib engage with each other when the upper case and the lower case are coupled. In this instance, the first engaging rib and the second engaging rib are formed such that they engage so as to be substantially cross-shaped, and restrict the positions of the upper case and the lower case in the inward and outward directions and the peripheral direction perpendicular to these inward and outward directions.

However, in the structure of this conventional mobile device, the upper case and the lower case are joined together by a plurality of portions being tightened by screws with the upper case and the lower case being coupled, and the first engaging rib and the second engaging rib being engaged with each other. Therefore, there is a problem in that portions of the upper case and the lower case in areas between the tightened areas, which are not tightened by the screws, become easily deformed in the thickness direction when the mobile device is dropped or the like and suffers an impact, whereby a gap is formed between the upper case and the lower case.

In addition, although the thickness of both the upper case and the lower case of the conventional mobile device is required to be made thinner along with the increased screen size of the display panel and its high-density mounting, simply reducing the thickness of the upper case and the lower case not only exacerbates the above-described problem, but also causes another problem in that the warping deformation of the overall device by external impact occurs more easily.
Further, document EP 2 262 204 A2 relates to a housing assembly for electronic devices, e.g. cellular phones, comprising a first housing and a second housing to be attached to an assembly unit located therebetween. Document US 2006/0079128 A1 is concerned with a housing for mobile electronic devices which comprises a first and a second housing provided with a housing interface. Document US 5,946,395 A describes a housing assembly for electronic devices, e.g. cellular phones, comprising a gasket disposed along and sandwiched between mating perimeters of two housing portions.

### SUMMARY OF THE INVENTION

An object of the present invention is to prevent the deformation and positional misalignment of a case caused by external impact.

In accordance with one aspect of the present invention, there is provided that the second engaging section of the middle case is provided with an auxiliary rib and the fourth engaging section of the lower case is provided with an auxiliary projection which engages with the auxiliary rib and integrally joins the upper case, the middle case and the lower case.

According to the present invention, the upper case and the lower case can be joined with each other by the middle case, whereby the rigidity of the overall device can be increased.

The above and further objects and novel features of the present invention will more fully appear from the following detailed description when the same is read in conjunction with the accompanying drawings. It is to be expressly understood, however, that the drawings are for the purpose of illustration only and are not intended as a definition of the limits of the invention.

### BRIEF DESCRIPTION OF THE DRAWINGS

FIG. 1 is a front view of an embodiment in which the present invention has been applied to a mobile information terminal 100;
FIG. 2 is an exploded perspective view of the mobile information terminal 100 shown in FIG. 1;
FIG. 3 is an exploded perspective view of the mobile information terminal 100 shown in FIG. 2, in which the mobile information terminal 100 has been inverted to be upside down;
FIG. 4 is an enlarged cross-sectional view of the mobile information terminal 100 taken along line A-A in FIG. 1;
FIG. 5 is an enlarged and exploded cross-sectional view of the mobile information terminal 100 shown in FIG. 4;
FIG. 6 is an exploded perspective view of the main section of the mobile information terminal 100 in FIG. 2 when an upper case, a lower case, and a middle case are attached to one another;
FIG. 7 is an exploded perspective view of the main section of the mobile information terminal 100 in FIG. 3 when the upper case, the lower case, and the middle case are attached to one another; and
FIG. 8 is an enlarged and exploded perspective view of the main section, in which third and fourth engaging sections in FIG. 2 when viewed from inside the device case is shown.

### DETAILED DESCRIPTION OF THE PREFERRED EMBODIMENTS

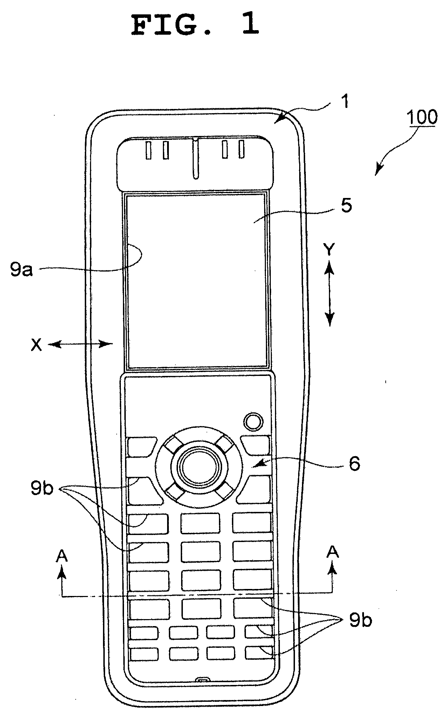

An embodiment in which the present invention has been applied to a mobile information terminal 100 will be described with reference to FIG. 1 to FIG. 8.

As shown in FIG. 1 to FIG. 3, the mobile information terminal 100 includes an upper case 1, a lower case 2 mounted to the lower portion of the upper case 1, and a middle case 3 mounted inside the upper case 1 and the lower case 2.

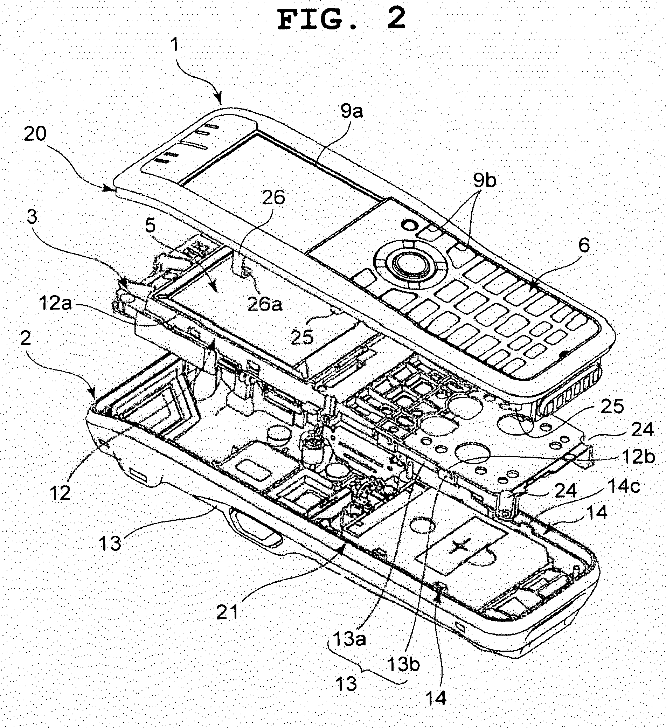

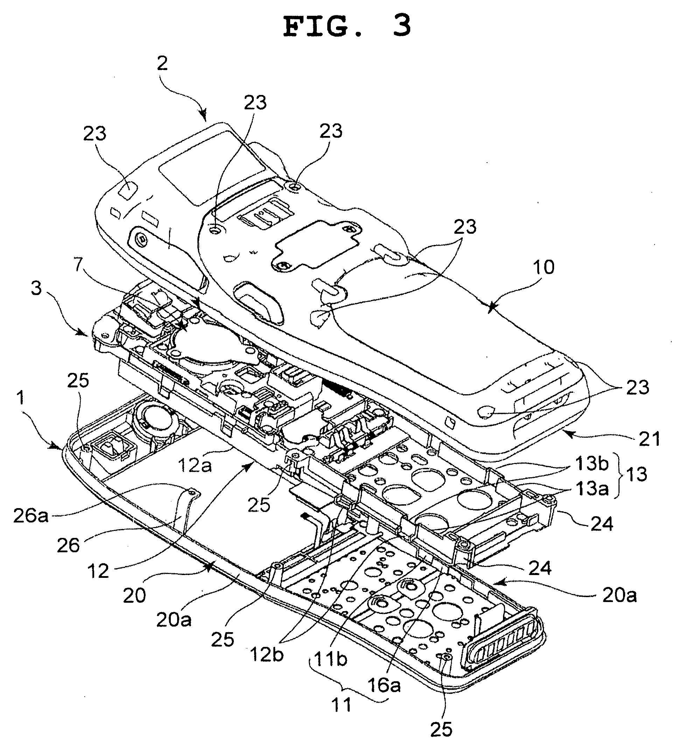

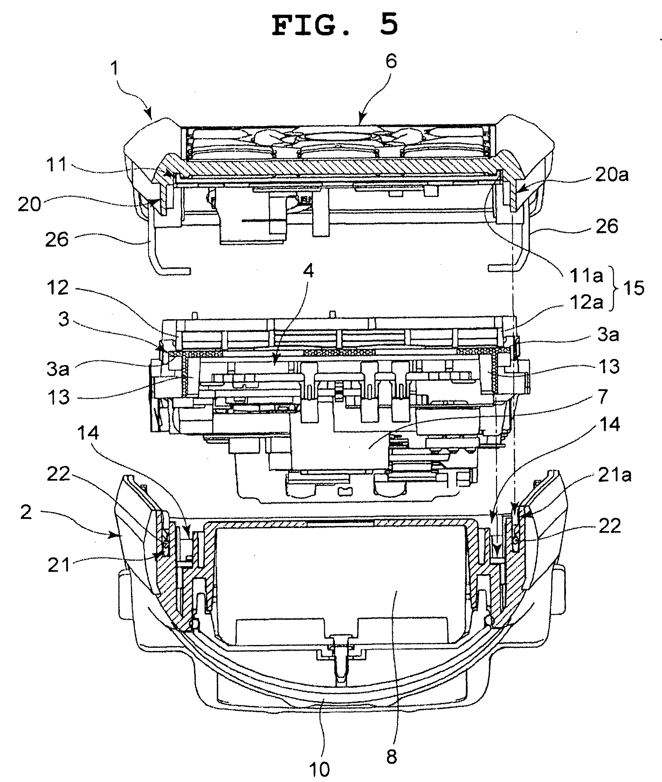

In this instance, a circuit board 4 is provided in the middle case 3, as shown in FIG. 5. In addition, a display section 5 and a keyboard section 6 are provided on the top surface of the circuit board 4, as shown in FIG. 2. Moreover, various electronic components 7 required for information processing are provided on the undersurface of the circuit board 4 so as to correspond to the underside of the display section 5, as shown in FIG. 3.

The display section 5 is constituted by a flat display panel, such as a liquid crystal display panel or an electroluminescent (EL) display panel, and electro-optically displays various information associated with information processing. The keyboard device 6 includes various keys required for information processing, such as character keys, cursor keys, and function keys.

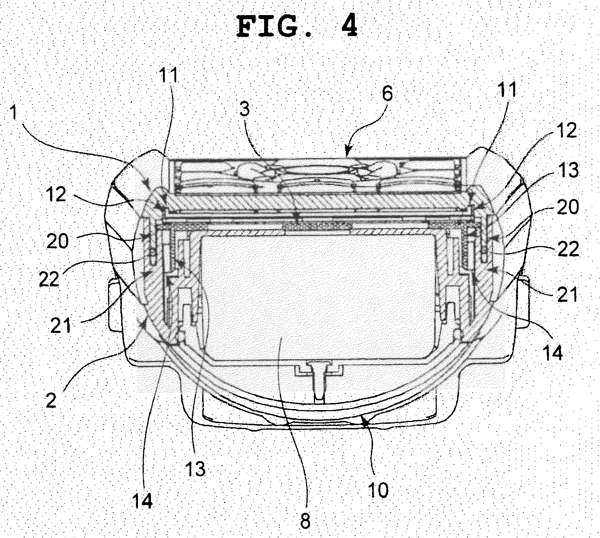

In the upper case 1, a display opening section 9a is provided corresponding to the display section 5, and a plurality of key insertion holes 9b are provided corresponding to the keys of the keyboard section 6, as shown in FIG. 1, FIG. 2, and FIG. 6. In the lower case 2, a battery housing section 8 described hereafter is provided corresponding to the circuit board 4 of the middle case 3 under the keyboard section 6, as shown in FIG. 4 to FIG. 7. Also, a battery cover 10 that covers this battery housing section 8 is detachably attached to the lower case 2.

As shown in FIG. 3 to FIG. 7, a first engaging section 11 is provided in the peripheral edge portion of the undersurface of the upper case 1, and a second engaging section 12 that engages with the first engaging section 11 of the upper case 1 is provided in the peripheral edge portion of the top surface of the middle case 3. In addition, a third engaging section 13 is provided in the peripheral edge portion of the undersurface of the middle case 3, and a fourth engaging section 14 that engages with the third engaging section 13 of the middle case 3 is provided in the peripheral edge portion of the upper portion of the lower case 2.

In this instance, the first engaging section 11 is a groove portion, a rib, or the like in the peripheral edge portion of the undersurface of the upper case 1, which is provided along the periphery of the upper case 1, as shown in FIG. 3 to FIG. 7. The second engaging section 12 is various types of ribs provided projecting upwards from the peripheral edge portion of the top surface of the middle case 3 as shown in FIG. 4 and FIG. 5, which is provided along the periphery of the middle case 3, as shown in FIG. 2 and FIG. 3. This second engaging section 12 is structured to engage with the first engaging section 11 of the upper case 1 when the middle case 3 is arranged inside the upper case 1.

That is, the first engaging section 11 and the second engaging section 12 include a first restricting section 15 (see FIG. 5) and a second restricting section 16 (see FIG. 16), as shown in FIG. 3 to FIG. 7. The first restricting section 15 restricts the positions of the upper case 1 and the middle case 3 in the inward and outward directions, or in other words, the thickness directions of both side surfaces of the upper case 1 and the middle case 3 (such as the width directions indicated by the arrow X in FIG. 1), when the first engaging section 11 and the second engaging section 12 are engaged with each other. The second restricting section 16 restricts the positions of the upper case 1 and the middle case 3 in the peripheral directions, or in other words, the directions along the peripheries of the upper case 1 and the middle case 3 (such as the front and back directions, (namely length direction,) indicated by the arrow Y in FIG. 1).

The first restricting section 15 is constituted by a groove section 11a provided along the periphery of the upper case 1 and a frame-shaped rib 12a provided along the periphery of the middle case 3, as shown in FIG. 2, FIG. 5 and FIG. 6. As a result, the first restricting section 15 is structured such that the frame-shaped rib 12a in the middle case 3 engages with the groove section 11a in the upper case 1, thereby restricting the positions of the upper case 1 and the middle case 3 in the inward and outward directions (such as the arrow X direction in FIG. 1) and preventing the deformation of the upper case 1 and the middle case 3 in the inward and outward directions, as shown in FIG. 5.

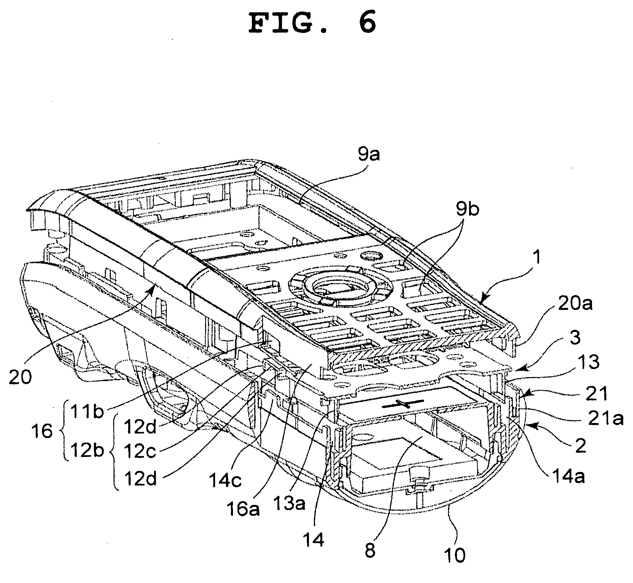

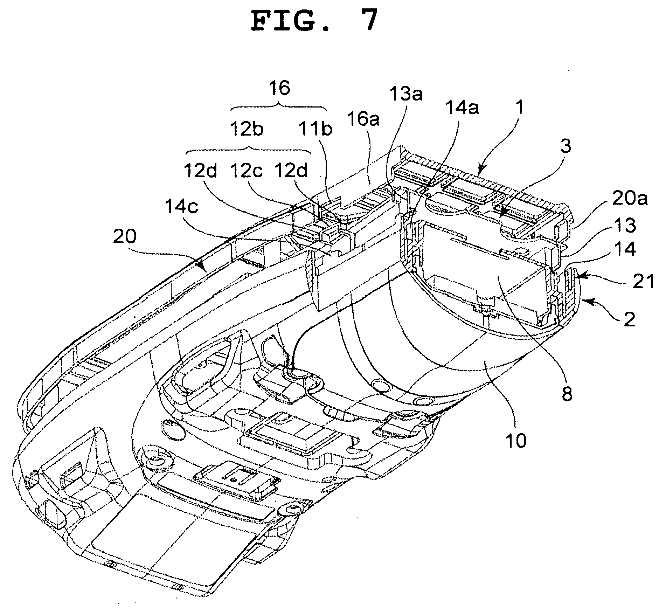

The second restricting section 16 is constituted by a wide groove section 11b provided in a predetermined area in a downward rib 16a on the periphery of the undersurface of the upper case 1, and a wide auxiliary rib 12b provided in a predetermined area on the periphery of the middle case 3, as shown in FIG. 6,. In this instance, the wide auxiliary rib 12b in the middle case 3 is constituted by a top plate portion 12c provided facing the interior of the upper case 1 and a pair of side plate portions 12d that extend downwards on both sides of the top plate portion 12c, as shown in FIG. 6 and FIG. 7. The wide groove section 11b and the wide auxiliary rib 12b of the second restricting section 16 are respectively provided in a total of ten areas, with five areas being on each side.

As a result, the second restricting section 16 is structured such that the wide auxiliary rib 12b in the middle case 3 engages with the wide groove section 11b provided in the downward rib 16a of the upper case 1, thereby restricting the positions of the upper case 1 and the middle case 3 in the peripheral directions (such as the front and back directions indicated by the arrow Y in FIG. 1), and preventing the positional misalignment of the upper case 1 and the middle case 3 in the peripheral directions, as shown in FIG. 6.

The third engaging section 13 is a rib that extends downward from the peripheral edge portion of the undersurface of the middle case 3 as shown in FIG. 4 to FIG. 7, which is provided along the periphery of the middle case 3 as shown in FIG. 2 and FIG. 3. The fourth engaging section 14 is a groove section provided in the lower case 2 along the inner periphery of the second engaging section 12, and engages with the third engaging section 13 in the middle case 3, as shown in FIG. 4 and FIG. 5.

The third engaging section 13 and the fourth engaging section 14 include a third restricting section 17 and a fourth restricting section 18, as shown in FIG. 6 to FIG. 8. The third restricting section 17 restricts the positions of the middle case 3 and the lower case 2 in the inward and outward directions, or in other words, the thickness directions of both side surfaces of the lower case 2 and the middle case 3 (such as the width directions indicated by the arrow X in FIG. 1), when the third engaging section 13 and the fourth engaging section 14 are engaged with each other. The fourth restricting section 18 restricts the positions of the middle case 3 and the lower case 2 in the peripheral directions, or in other words , the directions along the peripheries of the lower case 2 and the middle case 3 (such as the front and back directions indicated by the arrow Y in FIG. 1).

The third restricting section 17 is constituted by a frame-shaped rib 13a provided almost continuously along the periphery of the middle case 3 and a ring-shaped groove section 14a provided almost continuously along the periphery of the lower case 2, as shown in FIG. 3 and FIG. 6 to FIG. 8. As a result, the third restricting section 17 is structured such that the frame-shaped rib 13a in the middle case 3 engages with the ring-shaped groove section 14a in the lower case 2, thereby restricting the positions of the middle case 3 and the lower case 2 in the inward and outward directions (such as the horizontal directions indicated by the arrow X in FIG. 1), and preventing the deformation of the middle case 3 and the lower case 2 in the inward and outward directions.

The fourth restricting section 18 is constituted by a partial rib 13b provided projecting outwards in a predetermined area of the frame-shaped rib 13a in the middle case 3 and a pair of gripping ribs 14b provided in a predetermined area inside the ring-shaped groove section 14a in the lower case 2, as shown in FIG. 2, and FIG. 6 to FIG. 8. As in the case of the second restricting section 16, the partial rib 13b and the pair of gripping ribs 14b of the fourth restricting section 18 are provided in a total of ten areas, with five areas being on each side.

As a result, the fourth restricting section 16 is structured such that the partial rib 13b in the middle case 3 engages between the pair of griping ribs 14b in the lower case 2, thereby restricting the positions of the lower case 2 and the middle case 3 in the peripheral directions (such as the front and back directions indicated by the arrow Y in FIG. 1), and preventing the positional misalignment of the lower case 2 and the middle case 3 in the peripheral directions, as shown in FIG. 2, and FIG. 6 to FIG. 8.

In this instance, an auxiliary projection 14c is provided in the fourth engaging section 14 of the lower case 2, as shown in FIG. 6 and FIG. 7. The auxiliary projection 14c engages with the auxiliary rib 12b of the second restricting section 16 in the second engaging section 12 of the middle case 3 from below. That is, this auxiliary projection 14c is provided projecting upwards on the upper end portion of the groove section 14a of the third restricting section 17 in the fourth engaging section 14, and inserted between the pair of side plate portions 12d of the auxiliary rib 12b of the second restricting section 16 in the second engaging section 12 of the middle case 3.

As a result of this structure, the auxiliary projection 14c integrally joins the upper case 1, the middle case 3, and the lower case 2, by being inserted between the pair of side plate portions 12d of the auxiliary rib 12b, with the auxiliary rib 12b of the second restricting section 16 in the second engaging section 12 of the middle case 3 engaging with the wide groove section 11b of the first engaging section 11 of the upper case 1, as shown in FIG. 6 and FIG. 7.

In addition, a fifth engaging section 20 is provided on the outer periphery of the first engaging section 11 of the upper case 1, continuously along the outer periphery of the upper case 1, as shown in FIG. 2 to FIG. 7. Moreover, a sixth engaging section 21 that engages with the fifth engaging section 20 of the upper case 1 is provided on the outer periphery of the fourth engaging section 14 of the lower case 2, continuously along the outer periphery of the lower case 2. As shown in FIG. 5 to FIG. 7, the fifth engaging section 20 is a frame-shaped rib 20a provided continuously along the outer periphery of the upper case 1, and the sixth engaging section 21 is a ring-shaped groove section 21a provided continuously along the outer periphery of the lower case 2.

In this instance, the fifth engaging section 20 and the sixth engaging section 21 are formed such that the meshing depths thereof are almost the same as the depths of the third engaging section 13 of the middle case 3 and the fourth engaging section 14 of the lower case 2, as shown in FIG. 4 and FIG. 5. Inside the fifth engaging section 20 and the sixth engaging section 21, a waterproofing gasket 22 is arranged continuously along the overall peripheries of the upper case 1 and the lower case 2.

Specifically, the waterproofing gasket 22 is a ring-shaped gasket composed of a material having elasticity, such as rubber, and is structured such that, when the fifth engaging section 20 of the upper case 1 engages with the sixth engaging section 21 of the lower case 2 with the waterproofing gasket 22 being arranged inside the sixth engaging section 21 of the lower case 2, the frame-shaped rib 20a in the fifth engaging section 20 presses the waterproofing gasket 22 into the ring-shaped groove section 21a of the sixth engaging section 21, as shown in FIG. 4 and FIG. 5.

The fifth engaging section 20 and the sixth engaging section 21 are structured to hold therebetween a brim-shaped rib 3a that projects outward from the peripheral edge portion of the middle case 3, as shown in FIG. 4. Specifically, the sixth engaging section 21 of the lower case 2 is formed such that its upper end portion on the inner side is slightly lower than its upper end portion on the outer side, as shown in FIG. 4 and FIG. 5.

That is, the fifth engaging section 20 and the sixth engaging section 21 are structured such that, when the fifth engaging section 20 of the upper case 1 engages with the sixth engaging section 21 of the lower case 2, the upper end portion on the outer side of the sixth engaging section 21 comes in contact with the lower end surface of the upper case 1, and the upper end portion on the inner side of the sixth engaging section 21 is positioned slightly away from the lower end surface of the upper case 1, as shown in FIG. 4.

As a result, the fifth engaging section 20 and the sixth engaging section 21 are structured such that the upper end portion positioned on the inner side of the sixth engaging section 21 of the lower case 2 is positioned slightly away from the lower end surface of the upper case 1, the brim-shaped rib 3a of the middle case 3 is arranged in this area that is slightly away from the lower end surface of the upper case 1, and the rib 3a of the middle case 3 is held between the upper end portion of the sixth engaging section 21 and the lower end surface of the upper case 1, as shown in FIG. 4.

The upper case 1, the lower case 2, and the middle case 3 described above are structured to be joined by a total of eight portions, which are in the upper edge side, the lower edge side, and two intermediate areas longitudinally located between the upper and lower edges, being tightened by screws (not shown), as shown in FIG. 3. Specifically, in the lower case 2, a plurality of screw insertion holes 23 are provided in a total of eight portions in the upper edge side, the lower edge side, and two intermediate areas longitudinally located between the upper and lower edges. In the middle case 3, a plurality of boss insertion holes 24 are provided corresponding to the screw insertion holes 23 in the lower case 2, excluding the sides of the display section 5.

On the upper case 1, bosses 25 having screw holes into which screws (not shown) are screwed are provided corresponding to the boss insertion holes 24 in the middle case 3, excluding the sides of the display section 5, as shown in FIG. 3. When the middle case 3 is arranged on the upper case 1, the bosses 25 on the upper case 1 are respectively inserted into the boss insertion holes 24 in the middle case 3, and correspond to the screw insertion holes 23 in the lower case 2 arranged on the lower portion of the middle case 3, as shown in FIG. 2 and FIG. 3.

In this instance, a pair of auxiliary clasps 26 for screw-tightening is provided on portions of the upper case 1 where the sides of the display section 5 are placed, so as to correspond to the screw insertion holes 23 in the lower case 2, as shown in FIG. 2 and FIG. 3. As shown in FIG. 3 and FIG. 5, this pair of auxiliary clasps 26 is provided on the side surfaces inside the upper case 1, and the lower end portion of which extends lower than the middle case 3 (higher in FIG. 3). The extended lower end portion is bent along the undersurface of the middle case 3, and a screw hole 26a is provided in this bent area.

As a result of this structure, when the middle case 3 is arranged in the upper case 1, the pair of auxiliary clasps 26 is positioned lower than the middle case 3. Then, when the lower case 2 is arranged on the lower portion of middle case 3, the screw holes 26a in the auxiliary clasps 26 correspond to the screw insertion holes 23 in the lower case 2. Subsequently, when a screw (not shown) is inserted into each screw hole 26a from the screw insertion hole 23 in the lower case 2, and tightened by being screwed thereinto, portions of the upper case 1, the middle case 3, and the lower case 2 on the sides of the display section 5 are joined with one another.

The middle case 3 is arranged in almost the overall area inside the upper case 1 and the lower case 2, including an area corresponding to the battery housing section 8, as shown in FIG. 2 and FIG. 3. Specifically, the battery housing section 8 is formed in the lower case 2 by a portion of the lower case 2 projecting towards the middle case 3 to form a hollow shape, and the inside of the projecting portion being opened toward the lower side of the lower case 2, as shown in FIG. 4 and FIG. 5. Therefore, a battery cover 10 for covering the battery housing section 8 is detachably attached to the lower case 2.

Next, the assembly of the mobile information terminal 100 will be described.

First, the display section 5 and the keyboard section 6 are attached on the top surface of the circuit board 4 as shown in FIG. 2, and the various electronic components 7 are attached to the bottom surface of the circuit board 4 as shown in FIG. 3, in advance. Then, the circuit board 4 is attached to the middle case 3, as shown in FIG. 2 and FIG. 3.

Next, the middle case 3 is arranged inside the upper case 1. In this arrangement, the middle case 3 is inserted between the pair of auxiliary clasps 26 provided in the upper case 1, and the lower end portions of the pair of auxiliary clasps 26, each of which is provided with the screw hole 26a, are positioned below the middle case 3, such that the display section 5 corresponds to the display opening section 9a of the upper case 1, and the keys in the keyboard section 6 correspond to the key insertion holes 9b in the upper case 1, respectively.

In this state, the first engaging section 11 of the upper case 1 and the second engaging section 12 of the middle case 3 are engaged such that the bosses 25 in the upper case 1 respectively correspond to the boss insertion holes 24 in the middle case 3. As a result, the ring-shaped groove section 11a of the first restricting section 15 of the first engaging section 11 which is provided along the periphery of the upper case 1 and the frame-shaped rib 12 of the first restricting section 15 of the second engaging section 12 which is provided along the periphery of the middle case 3 are engaged, whereby the positions of the upper case 1 and the middle case 3 in the inward and outward directions (such as the width directions indicated by the arrow X in FIG. 1) are restricted, as shown in FIG. 5.

Similarly, the wide groove section 11b of the second restricting section 16 of the first engaging section 11 which is provided in a predetermined area on the periphery of the upper case 1 and the wide auxiliary rib 12b of the second restricting section 16 of the second engaging section 12 which is provided in a predetermined area on the periphery of the middle case 1 are engaged, whereby the positions of the upper case 1 and the middle case 3 in the peripheral directions (such as the front-back directions indicated by the arrow Y in FIG. 1) are restricted, as shown in FIG. 6 and FIG. 7.

Also, at this time, the bosses 25 in the upper case 1 are inserted into the boss insertion holes 24 in the middle case 3, respectively. In addition, the peripheral edge portion of the display section 5 comes in contact with the inner peripheral portion of the display opening section 9a of the upper case 1, and the display section 5 is exposed outside of the upper case 1 from the display opening section 9a. Moreover, the keys of the keyboard section 6 are respectively inserted into the key insertion holes 9b and exposed outside of the upper case 1.

Next, the waterproofing gasket 22 is mounted inside the sixth engaging section 21 of the lower case 2, and then the lower case 2 is arranged below the upper case 1 from under the middle case 3, such that the third engaging section 13 of the middle case 3 corresponds to the fourth engaging section 14 of the lower case 2, the fifth engaging section 20 of the upper case 1 corresponds to the sixth engaging section 21 of the lower case 2, and the boss insertion holes 24 in the middle case 2 and the pair of auxiliary clasps 26 are respectively correspond to the screw insertion holes 23 in the lower case 2, as shown in FIG. 5 and FIG. 6.

In this state, the third engaging section 13 of the middle case 3 and the fourth engaging section 14 of the lower case 2 are engaged, and the fifth engaging section 20 of the upper case 1 and the sixth engaging section 21 of the lower case 2 are engaged. As a result, the frame-shaped rib 13a of the third restricting section 17 of the third engaging section 13 which is provided almost continuously along the periphery of the middle case 3 and the ring-shaped groove section 14a of the third restricting section 17 of the fourth engaging section 14 which is provided almost continuously along the periphery of the lower case 2 are engaged, whereby the positions of the middle case 3 and the lower case 2 in the inward and outward directions (such as the width directions indicated by the arrow X in FIG. 1) are restricted, as shown in FIG. 4 and FIG. 5.

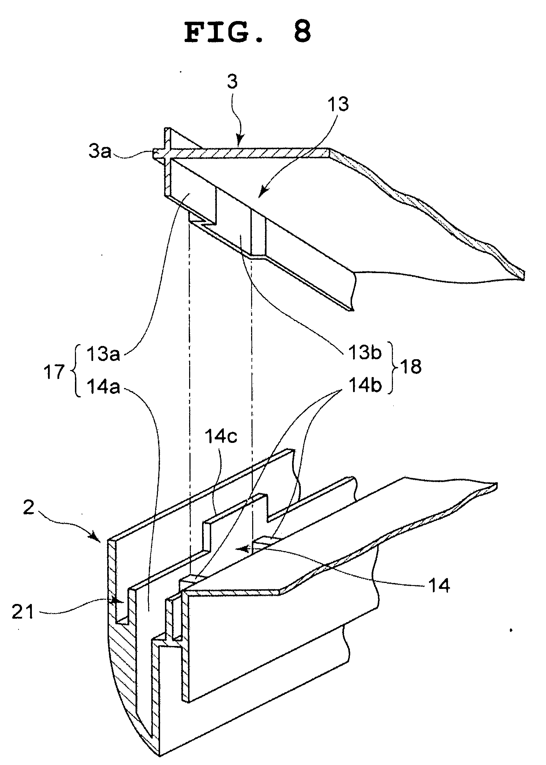

Similarly, the partial rib 13b of the fourth restricting section 18 of the third engaging section 13 which is provided projecting outwards in a predetermined area of the frame-shaped rib 13a in the middle case 3 and the pair of gripping ribs 14b of the fourth restricting section 18 of the fourth engaging section 14 which is provided in a predetermined area inside the ring-shaped groove section 14a in the lower case 2 are engaged, whereby the positions of the lower case 2 and the middle case 3 in the peripheral directions (such as the front and back directions indicated by the arrow Y in FIG. 1) are restricted, as shown in FIG. 8.

At this time, the auxiliary projection 14c provided on the upper end portion of the groove section 14a of the third restricting section 17 in the fourth engaging section 14 of the lower case 2 is inserted between the pair of side plate portions 12d of the auxiliary ribs 12b in the second restricting section 16 of the middle case 3, with the auxiliary ribs 12b of the second restricting section 16 in the second engaging section 12 of the middle case 3 being engaged with the wide groove sections 11b of the first engaging section 11 of the upper case 11, as shown in FIG. 6 and FIG. 7. As a result, the upper case 1, the middle case 3, and the lower case 2 are integrally joined.

In addition, the frame-shaped rib 20a in the fifth engaging section 20 which is provided along the outer periphery of the upper case 1 and the ring-shaped groove section 21a of the sixth engaging section 21 provided along the outer periphery of the lower case 2 are deeply engaged with each other. As a result, the frame-shaped rib 20a which is the fifth engaging section 20 of the upper case 1 presses the waterproofing gasket 22 into the ring-shaped groove section 21a which is the sixth engaging section 21 of the lower case 2, and the brim-shaped rib 3a in the middle case 3 is held between the lower end surface of the upper case 1 positioned on the inner side of the fifth engaging section 20 and the upper end portion positioned on the inner side of the sixth engaging section 21.

Then, a screw (not shown) is inserted from below into each screw insertion hole 23 in the lower case 2, screwed into the screw hole of each boss 24 in the upper case 1 and each screw hole 26a in the pair of auxiliary clasps 26, and tightened. As a result, the first engaging section 11 of the upper case1 and the second engaging section 12 of the middle case 3 are firmly engaged, and the third engaging section 13 of the middle case 3 and the fourth engaging section 14 of the lower case 2 are firmly engaged.

In addition, the fifth engaging section 20 of the upper case 1 and the sixth engaging section 21 of the lower case 2 are firmly engaged, and the fifth engaging section 20 of the upper case 1 presses the waterproofing gasket 22 into the sixth engaging section 21 of the lower case 1, whereby waterproofing is ensured. Moreover, the brim-shaped rib 3a in the middle case 3 is firmly held between the lower end surface of the upper case 1 positioned on the inner side of the fifth engaging section 20 and the upper end portion positioned on the inner side of the sixth engaging section 21. As a result, the overall rigidity of the upper case 1, the lower case 2, and the middle case 3 is ensured.

As described above, the mobile information terminal 100 is structured to include: the first engaging section 11 provided in the peripheral edge portion of the undersurface of the upper case 1; the second engaging section 12 provided on the peripheral edge portion of the top surface of the middle case 3 arranged inside the upper case 1, which engages with the first engaging section 11; the third engaging section 13 provided on the peripheral edge portion of the undersurface of the middle case 3; and the fourth engaging section 14 provided in the peripheral edge portion of the top surface of the lower case 2 arranged below the upper case 1, which engages with the third engaging section 13. Therefore, the deformation and positional misalignment of the upper case 1, the middle case 3, and the lower case 2 caused by external impact can be prevented. As a result, a mobile information terminal having high impact-resistance can be provided.

That is, in the mobile information terminal 100, the upper case 1 and the middle case 3 are joined by the first engaging section 11 and the second engaging section 12 being engaged. In addition, the middle case 3 and the lower case 2 are joined by the third engaging section 13 and the fourth engaging section 14 being engaged. As a result, the upper case 1 and the lower case 2 can be joined with each other by the middle case 3. Accordingly, the rigidity of the overall device can be enhanced. Therefore, even when receiving external impact, the upper case 1, the lower case 2, and the middle case 3 can as a whole receive the impact. Thus, the torsional deformation, warping deformation, and positional misalignment of the upper case 1, the lower case 2 , and the middle case 3 are favorably and reliably prevented. As a result, a mobile information terminal having high impact-resistance can be provided.

In this instance, the first engaging section 11 and the second engaging section 12 include the first restricting section 15 that restricts the positions of the upper case 1 and the middle case 3 in the inward and outward directions when the first engaging section 11 and the second engaging section 12 are engaged with each other, and the second restricting section 16 that restricts the positions of the upper case 1 and the middle case 3 in the peripheral direction when the first engaging section 11 and the second engaging section 12 are engaged with each other. Therefore, when the first engaging section 11 is in engagement with the second engaging section 12, even if suffering an impact from being dropped or the like, the deformation of the upper case 1 and the middle case 3 in the inward and outward directions is reliably prevented by the first restricting section 15, and the positional misalignment of the upper case 1 and the middle case 3 in the peripheral directions is reliably prevented by the second restricting section 16. Accordingly, the torsional deformation, warping deformation, and positional misalignment of the upper case 1 and the middle case 3 are favorably and reliably prevented.

In addition, the third engaging section 13 and the fourth engaging section 14 include the third restricting section 17 that restricts the positions of the middle case 3 and the lower case 2 in the inward and outward directions when the third engaging section 13 and the fourth engaging section 14 are engaged with each other, and the fourth restricting section 18 that restricts the positions of the middle case 3 and the lower case 2 in the peripheral directions when the third engaging section 13 and the fourth engaging section 14 are engaged with each other. Therefore, when the third engaging section 13 is in engagement with the fourth engaging section 14, even if suffering an impact from being dropped or the like, the deformation of the middle case 3 and the lower case 2 in the inward and outward directions is reliably prevented by the third restricting section 17, and the positional misalignment of the middle case 3 and the lower case 2 in the peripheral directions is reliably prevented by the fourth restricting section 18. Accordingly, the torsional deformation, warping deformation, and positional misalignment of the middle case 3 and the lower case 2 are favorably and reliably prevented.

In this instance, the upper case 1, the lower case 2, and the middle case 3 are joined with one another by a plurality of portions being tightened by screws. Therefore, even if suffering an impact from being dropped or the like, the deformation of the upper case 1, the lower case 2, and the middle case 3 in the inward and outward directions is favorably and reliably prevented by the first restricting section 15 and the third restricting section 17, and the positional misalignment of the upper case 1, the lower case 2, and the middle case 3 in the peripheral directions is favorably and reliably prevented by the second restricting section 16 and the fourth restricting section 18. In addition, the warping deformation of the overall device is favorably and reliably prevented.

In addition, the second engaging section 12 of the middle case 3 is provided with the auxiliary rib 12b that is a first auxiliary engaging section, and the fourth engaging section 14 of the lower case 2 is provided with the auxiliary projection 14c that is a second auxiliary engaging section which engages with the auxiliary rib 12b in the second engaging section 12. Therefore, the upper case 1, the middle case 3, and the lower case 2 are integrally joined, whereby the torsional deformation, warping deformation, and positional misalignment of the overall upper case 1, middle case 3, and lower case 2 are favorably and reliably prevented.

That is, the auxiliary projection 14c provided on the upper end portion of the groove section 14a of the third restricting section 17 in the fourth engaging section 14 of the lower case 2 is inserted between the pair of side plate portions 12d of the auxiliary rib 12b in the second restricting section 16 of the middle case 3, with the auxiliary rib 12b in the second restricting section 16 of the second engaging section 12 of the middle case 3 being engaged with the wide groove section 11b of the first engaging section 11 of the upper case 1. Therefore, the upper case 1, the middle case 3, and the lower case 2 can be integrally joined more firmly and reliably.

Moreover, in the mobile information terminal 100, the fifth engaging section 20 is provided in the outer periphery of the first engaging section 11 of the upper case 1, continuously along the outer periphery of the upper case 1. In addition, the sixth engaging section 21 that engages with the fifth engaging section 20 is provided in the outer periphery of the third engaging section 13 of the lower case 2, continuously along the outer periphery of the lower case 2. Accordingly, when the upper case 1, the lower case 2, and the middle case 3 are joined with one another, the fifth engaging section 20 and the sixth engaging section 21 are engaged, whereby the rigidity of the overall device is further enhanced.

In this instance, the fifth engaging section 20 and the sixth engaging section 21 are formed to be engaged almost as deeply as the third engaging section 13 and the fourth engaging section 14 are, and the waterproofing gasket 22 is arranged in the area where the fifth engaging section 20 and the sixth engaging section 21 are engaged. Therefore, when the upper case 1, the lower case 2, and the middle case 3 are joined with one another, the upper case 1 and the lower case 2 are firmly joined, and the fifth engaging section 20 presses the waterproofing gasket 22 into the sixth engaging section 21, whereby the waterproofing of the upper case 1 and the lower case 2 is ensured.

Furthermore, in the mobile information terminal 100, the battery housing section 8 is provided in the lower case 2, and the middle case 3 is arranged in almost the overall area inside the upper case 1 and the lower case 2, including an area corresponding to the battery housing section 8. Therefore, although the battery housing section 8 is provided in the lower case 2, a portion of the lower case 2 corresponding to the battery housing section 8 is firmly joined with the middle case 3 and the upper case 1, whereby the rigidity of the overall device is further enhanced.

Still further, in the mobile information terminal 100, the pair of auxiliary clasps 26 is provided on the sides of the display section 5 in the upper case 1, and the lower case 2 is screwed onto the pair of auxiliary clasps 26. Therefore, even when the display screen of the display section 5 is made larger, portions of the upper case 1 and the lower case 2 on the sides of the display section 5 can be firmly joined, whereby the rigidity of the overall device is further enhanced.

Additionally, in the above-described embodiment, the present invention has been applied to a mobile information terminal. However, the present invention is not necessarily required to be applied to a mobile information terminal, and may be widely applied to various mobile electronic devices, such as mobile phones, electronic dictionaries, and portable music players.

## Claims

1. A mobile device (100) including an upper case (1), a lower case (2) arranged under the upper case (1), and a middle case (3) arranged inside the upper case (1) and the lower case (2), comprising:
a first engaging section (11) which is provided in a peripheral edge portion of an undersurface of the upper case (1);
a second engaging section (12) which is provided in a peripheral edge portion of a top surface of the middle case (3) and engages with the first engaging section (11);
a third engaging section (13) which is provided in a peripheral edge portion of an undersurface of the middle case (3); and
a fourth engaging section (14) which is provided in a peripheral edge portion of a top surface of the lower case (2) and engages with the third engaging section (13) **characterized in that** the second engaging section (12) of the middle case (3) is provided with an auxiliary rib (12b); and
the fourth engaging section (14) of the lower case (2) is provided with an auxiliary projection (14c) which engages with the auxiliary rib (12b) and integrally joins the upper case (1), the middle case (3) and the lower case (2).

2. The mobile device (100) according to claim 1,
**characterized in that** the first engaging section (11) and the second engaging section (12) include a first restricting section (15) and a second restricting section (16) which, when the first engaging section (11) and the second engaging section (12) engage with each other, restrict positions of the upper case (1) and the middle case (3) in (a) width direction of the mobile device (100) and (b) length direction of the mobile device (100), respectively; and
**in that** the third engaging section (13) and the fourth engaging section (14) include a third restricting section (17) and a fourth restricting section (14) which, when the third engaging section (13) and the fourth engaging section (14) engage with each other, restrict positions of the middle case (3) and the lower case (2) in (a) the width direction of the mobile device (100) and (b) in the length direction of the mobile device (100), respectively.

3. The mobile device (100) according to claim 2,
**characterized in that** that third engaging section (13) and the fourth engaging section (14) include the third restriction section (17) that restricts the positions of the middle case (3) and the lower case (2) in the inward and outward directions and
**in that** the fourth restriction section (18) restricts the positions of the middle case (3) and the lower case (2) in the peripheral direction.

4. The mobile device (100) according to claim 1,
**characterized in that** the first engaging section (11) of the upper case (1) has a fifth engaging section (20) which is provided on an outer periphery thereof continuously along an outer periphery of the upper case (1); and
**in that** the fourth engaging section (14) of the lower case (2) has a sixth engaging section (21) which is provided on an outer periphery thereof continuously along an outer periphery of the lower case (2) and which engages with the fifth engaging section (20)

5. The mobile device (100) according to claim 4,
**characterized in that** the fifth engaging section (20) and the sixth engaging section (21) are formed to deeply engage with each other; and
**in that** a waterproofing gasket (22) is arranged in an area where the fifth engaging section (20) and the sixth engaging section (21) engage with each other.

6. The mobile device (100) according to claim 5,
**characterized in that** the fifth engaging section (20) presses the waterproofing gasket (22) into the sixth engaging section (21), when the upper case (1), the middle case (2) and the lower case (3) are joined with one another.

7. The mobile device (100) according to claim 1,
**characterized in that** the lower case (2) is provided with a battery housing section (8); and
**in that** the middle case (3) is arranged in almost an overall area inside the upper case (1) and the lower case (2), including an area corresponding to the battery housing section (8).

8. The mobile device (100) according to at least one of claims 1 to 7,
**characterized in that** the third engagement section (13) is a rib that extends downward from the peripheral edge portion of the undersurface of the middle case (3), and
**in that** the fourth engaging section (14) is a groove section in the lower case (2) along the inner periphery of the second engaging section (12).

## Patentansprüche

1. Mobilvorrichtung (100), die eine obere Verkleidung (1), eine untere Verkleidung (2), die unter der oberen Verkleidung (1) angeordnet ist, sowie eine mittlere Verkleidung (3) enthält, die im Inneren der oberen Verkleidung (1) und der unteren Verkleidung (2) angeordnet ist, wobei sie umfasst:
einen ersten Eingriffsabschnitt (11), der sich an einem Umfangsrandabschnitt einer Unterseite der oberen Verkleidung (1) befindet;
einen zweiten Eingriffsabschnitt (12), der sich an einem Umfangsrandabschnitt einer Oberseite der mittleren Verkleidung (3) befindet und mit dem ersten Eingriffsabschnitt (11) in Eingriff ist;
einen dritten Eingriffsabschnitt (13), der sich an einem Umfangsrandabschnitt einer Unterseite der mittleren Verkleidung (3) befindet; und
einen vierten Eingriffsabschnitt (14), der sich an einem Umfangsrandabschnitt einer Oberseite der unteren Verkleidung (2) befindet und mit dem dritten Eingriffsabschnitt (13) in Eingriff ist, **dadurch gekennzeichnet, dass** der zweite Eingriffsabschnitt (12) des mittleren Gehäuses (3) mit einem Zusatz-Steg (12b) versehen ist; und
der vierte Eingriffsabschnitt (14) der unteren Verkleidung (2) mit einem Zusatz-Vorsprung (14c) versehen ist, der mit dem Zusatz-Steg (12b) in Eingriff ist und die obere Verkleidung (1), die mittlere Verkleidung (3) sowie die untere Verkleidung (2) integral verbindet.

2. Mobilvorrichtung (100) nach Anspruch 1,
**dadurch gekennzeichnet, dass** der erste Eingriffsabschnitt (11) und der zweite Eingriffsabschnitt (12) einen ersten Einschränkabschnitt (15) sowie einen zweiten Einschränkabschnitt (16) einschließen, die, wenn der erste Eingriffsabschnitt (11) und der zweite Eingriffsabschnitt (12) miteinander in Eingriff sind, Positionen der oberen Verkleidung (1) und der mittleren Verkleidung (3) in ah) Breitenrichtung der Mobilvorrichtung (100) bzw. b) Längenrichtung der Mobilvorrichtung (100) einschränken; und
dass der dritte Eingriffsabschnitt (13) und der vierte Eingriffsabschnitt (14) einen dritten Einschränkabschnitt (17) sowie einen vierten Einschränkabschnitt (14) einschließen, die, wenn der dritte Eingriffsabschnitt (13) und der vierte Eingriffsabschnitt (14) miteinander in Eingriff sind, Positionen der mittleren Verkleidung (3) und der unteren Verkleidung (2) in a) der Breitenrichtung der Mobilvorrichtung (100) bzw. b) in der Längenrichtung der Mobilvorrichtung (100) einschränken.

3. Mobilvorrichtung (100) nach Anspruch 2,
**dadurch gekennzeichnet, dass** der dritte Eingriffsabschnitt (13) und der vierte Eingriffsabschnitt (14) den dritten Einschränkabschnitt (17) einschließen, der die Positionen der mittleren Verkleidung (3) und der unteren Verkleidung (2) nach innen und nach außen einschränkt, und
dass der vierte Einschränkabschnitt (18) die Positionen der mittleren Verkleidung (3) sowie der unteren Verkleidung (2) in der Umfangsrichtung einschränkt.

4. Mobilvorrichtung (100) nach Anspruch 1,
**dadurch gekennzeichnet, dass** der erste Eingriffsabschnitt (11) der oberen Verkleidung (1) einen fünften Eingriffsabschnitt (20) aufweist, der an seinem Außenumfang durchgehend entlang einem Außenumfang der oberen Verkleidung (1) angeordnet ist; und
dass der vierte Eingriffsabschnitt (14) der unteren Verkleidung (2) einen sechsten Eingriffsabschnitt (21) aufweist, der an seinem Außenumfang durchgehend entlang einem Außenumfang der unteren Verkleidung (2) angeordnet ist und der mit dem fünften Eingriffsabschnitt (20) in Eingriff ist.

5. Mobilvorrichtung (100) nach Anspruch 4,
**dadurch gekennzeichnet, dass** der fünfte Eingriffsabschnitt (20) und der sechste Eingriffsabschnitt (21) so ausgebildet sind, dass sie tief miteinander in Eingriff kommen; und
das eine wasserundurchlässige Dichtung (22) in einem Bereich angeordnet ist, in dem der fünfte Eingriffsabschnitt (20) und der sechste Eingriffsabschnitt (21) miteinander in Eingriff sind.

6. Mobilvorrichtung (100) nach Anspruch 5,
**dadurch gekennzeichnet, dass** der fünfte Eingriffsabschnitt (20) die wasserundurchlässige Dichtung (22) in den sechsten Eingriffsabschnitt (21) hinein drückt, wenn die obere Verkleidung (1), die mittlere Verkleidung (2) und die untere Verkleidung (3) miteinander verbunden sind.

7. Mobilvorrichtung (100) nach Anspruch 1,
**dadurch gekennzeichnet, dass** die untere Verkleidung (2) mit einem Batteriegehäuseabschnitt (8) versehen ist; und
dass die mittlere Verkleidung (3) nahezu in einem gesamten Bereich im Inneren der oberen Verkleidung (1) sowie der unteren Verkleidung (2) einschließlich eines Bereiches angeordnet ist, der dem Batteriegehäuseabschnitt (8) entspricht.

8. Mobilvorrichtung (100) nach wenigstens einem der Ansprüche 1 bis 7,
**dadurch gekennzeichnet, dass** der dritte Eingriffsabschnitt (13) ein Steg ist, der sich von dem Umfangsrandabschnitt der Unterseite der mittleren Verkleidung (3) nach unten erstreckt, und
dass der vierte Eingriffsabschnitt (14) ein Nutabschnitt in der unteren Verkleidung (2) entlang dem Innenumfang des zweiten Eingriffsabschnitts (12) ist.

## Revendications

1. Dispositif mobile (100) incluant un boîtier supérieur (1), un boîtier inférieur (2) disposé sous le boîtier supérieur (1) et un boîtier médian (3) disposé à l'intérieur du boîtier supérieur (1) et du boîtier inférieur (2), comprenant :
une première section de mise en prise (11) qui est prévue dans une partie de bordure périphérique de la surface inférieure du boîtier supérieur (1),
une deuxième section de mise en prise (12) qui est prévue dans une partie de bordure périphérique de la surface supérieure du boîtier médian (3) et se met en prise avec la première section de mise en prise (11),
une troisième section de mise en prise (13) qui est prévue dans une partie de bordure périphérique de la surface inférieure du boîtier médian (3), et
une quatrième section de mise en prise (14) qui est prévue dans une partie de bordure périphérique de la surface supérieure du boîtier inférieur (2) et se met en prise avec la troisième section de mise en prise (13), **caractérisé en ce que** la deuxième section de mise en prise (12) du boîtier médian (3) est munie d'une nervure auxiliaire (12b), et
la quatrième section de mise en prise (14) du boîtier inférieur (2) est dotée d'une protubérance auxiliaire (14c) qui se met en prise avec la nervure auxiliaire (12b) et joint pour les réunir le boîtier supérieur (1), le boîtier médian (3) et le boîtier inférieur (2).

2. Dispositif mobile (100) selon la revendication 1,
**caractérisé en ce que** la première section de mise en prise (11) et la deuxième section de mise en prise (12) incluent une première section de limitation (15) et une deuxième section de limitation (16) qui, lorsque la première section de mise en prise (11) et la deuxième section de mise en prise (12) se mettent en prise l'une avec l'autre, restreignent respectivement les positions du boîtier supérieur (1) et du boîtier médian (3) selon (a) la direction de la largeur du dispositif mobile (100) et (b) la direction de la longueur du dispositif mobile (100), et
**en ce que** la troisième section de mise en prise (13) et la quatrième section de mise en prise (14) incluent une troisième section de limitation (17) et une quatrième section de limitation (14) qui, lorsque la troisième section de mise en prise (13) et la quatrième section de mise en prise (14) se mettent en prise l'une avec l'autre, restreignent respectivement les positions du boîtier médian (3) et du boîtier inférieur (2) selon (a) la direction de la largeur du dispositif mobile (100) et (b) la direction de la longueur du dispositif mobile (100).

3. Dispositif mobile (100) selon la revendication 2,
**caractérisé en ce que** la troisième section de mise en prise (13) et la quatrième section de mise en prise (14) incluent la troisième section de limitation (17) qui restreint les positions du boîtier médian (3) et du boîtier inférieur (2) dans les directions allant vers l'intérieur et vers l'extérieur, et
**en ce que** la quatrième section de limitation (18) restreint les positions du boîtier médian (3) et du boîtier inférieur (2) dans la direction périphérique.

4. Dispositif mobile (100) selon la revendication 1,
**caractérisé en ce que** la première section de mise en prise (11) du boîtier supérieur (1) comporte une cinquième section de mise en prise (20) qui est prévue sur sa périphérie externe, en continu le long de la périphérie externe du boîtier supérieur (1), et
**en ce que** la quatrième section de mise en prise (14) du boîtier inférieur (2) comporte une sixième section de mise en prise (21) qui est prévue sur sa périphérie externe, de manière continue le long de la périphérie externe du boîtier inférieur (2) et qui se met en prise avec la cinquième section de mise en prise (20).

5. Dispositif mobile (100) selon la revendication 4,
**caractérisé en ce que** la cinquième section de mise en prise (20) et la sixième section de mise en prise (21) sont formées pour se mettre fermement en prise l'une avec l'autre, et
**en ce qu'**un joint d'étanchéité à l'eau (22) est disposé dans une zone où la cinquième section de mise en prise (20) et la sixième section de mise en prise (21) sont en prise l'une avec l'autre.

6. Dispositif mobile (100) selon la revendication 5,
**caractérisé en ce que** la cinquième section de mise en prise (20) comprime le joint d'étanchéité à l'eau (22) dans la sixième section de mise en prise (21) lorsque le boîtier supérieur (1), le boîtier médian (3) et le boîtier inférieur (2) sont joints les uns aux autres.

7. Dispositif mobile (100) selon la revendication 1,
**caractérisé en ce que** le boîtier inférieur (2) est muni d'une section de logement de batterie (8), et
**en ce que** le boîtier médian (3) est agencé à l'intérieur de presque toute la zone intérieure du boîtier supérieur (1) et du boîtier inférieur (2), y compris une zone correspondant à la section de logement de batterie (8).

8. Dispositif mobile (100) selon au moins l'une des revendications 1 à 7,
**caractérisé en ce que** la troisième section de mise en prise (13) est une nervure qui s'étend vers le bas depuis la partie de bordure périphérique de la surface inférieure du boîtier médian (3), et
**en ce que** la quatrième section de mise en prise (14) est une section de rainure pratiquée dans le boîtier inférieur (2) le long de la périphérie interne de la deuxième section de mise en prise (12).
